# EUROPÄISCHE PATENTANMELDUNG

(11) **EP 0 791 898 A2**
(43) Veröffentlichungstag der Anmeldung: **27.08.1997**
(21) Anmeldenummer: 97101789.2
(22) Anmeldetag: 05.02.1997
(51) Int. Cl.: G07C 7/00

(54) **Fahrtschreiber oder einem Fahrtschreiber zugeordnetes Lese-/Schreibgerät für die Verwendung von fahrerbezogenen Datenkarten**

(30) Priorität: 22.02.1996 DE 29603156 U
(71) Anmelder: VDO Adolf Schindling AG, 60326 Frankfurt/Main (DE)
(72) Erfinder: Hug, Klaus, Dipl.-Ing. (FH), 78727 Oberndorf (DE)

(57) **Zusammenfassung**

Es wird vorgeschlagen, daß für den Transport der Datenkarten (31) zwischen einer Eingabe-/Entnahmeposition und einer Lese-/Schreibposition ein als flache Schublade ausgebildeter und mit Rastmittel (19, 20) versehener Schlitten (11, 12) vorgesehen ist, in welchen die Datenkarten (31) lose eingelegt werden. Die Führungsmittel (41, 42) des Schlittens (11, 12) werden mittelbar durch Befestigen einer Leiterplatte (36), an der ein den Datenkarten (31) zugeordneter Kontaktfedersatz angeordnet ist, und dem Boden (47) des Gehäuse (32) des betreffenden Gerätes festgehalten.

## Beschreibung

Fahrtschreiber oder einem Fahrtschreiber zugeordnetes Lese-/Schreibgerät für die Verwendung von fahrerbezogenen Datenkarten mit einem flachen Einbaugehäuse und mit einer Anordnung zum Transport der Datenkarten zwischen einer Eingabe-/Entnahmeposition und einer Lese-/Schreibposition sowie mit einer der Breite und Tiefe des Gehäuses weitgehend entsprechenden Leiterplatte, an welcher ein die Lese-/Schreibposition der Datenkarten definierender Kontaktfedersatz angeordnet ist.

Die Kontrolle der zunehmend komplexer werdenden Arbeitszeitvorschriften für das fahrende Personal im gewerblichen Straßenverkehr macht zur personen- bzw. fahrerbezogenen Erfassung der Arbeits- und Ruhezeiten die Verwendung von mit geeigneten Speichern versehenen Datenkarten erforderlich. Fahrerbezogene Datenkarten ermöglichen ferner, und zwar in einfacher Weise, die seit längerer Zeit geforderte für Fahrer- und Fahrzeugwechsel relevante räumliche Trennung bzw. räumliche Trennbarkeit von Fahrzeugmeßwerten und Arbeitszeitdaten sowie die Erfassung von Arbeitszeitdaten gegebenenfalls in einer geeigneten verdichteten Form über einen längeren Zeitraum.

Es ist einleuchtend, daß bereits installierte Fahrtschreiber herkömmlicher Art, das heißt Fahrtschreiber, bei denen die Datenerfassung mittels Diagrammscheiben erfolgt, falls sie aus Kostengründen nicht ausgetauscht und durch ein geeignetes, neues Gerät ersetzt werden, nur dadurch für die Verwendung von Datenkarten aufgerüstet werden können, daß Zusatzgeräte verwendet werden. Ein solches Zusatzgerät müßte, wenn die Prozessor- und Speicherleistung des Fahrtschreibers mitgenutzt werden könnte und geeignete Schnittstellen zur Pegelanpassung der vom Fahrtschreiber gelieferten Signale geschaffen werden, wenigstens Mittel zum Eingeben/Entnehmen und zum Kontaktieren der Datenkarten beinhalten, kann aber auch als ein weitgehend autarkes Gerät ausgebildet sein, das vom Fahrtschreiber gelieferte Signale verarbeitet. Im anderen Falle wäre ein neuer Fahrtschreiber vorzusehen, der entweder ein Kombinationsgerät, in welchem sowohl die bisher üblichen Diagrammscheiben als auch Datenkarten als Aufzeichnungsträger Anwendung finden oder ein ebenfalls für die Aufnahme von Datenkarten ausgerüsteter, ausschließlich elektronisch registrierender Fahrtschreiber darstellt. Letzterer kann zusätzlich beispielsweise mit einem Drucker und/oder mit einer mobilen Speicherkarte für die Erfassung sämtlicher vom Fahrtschreiber erfaßten und ermittelten Daten ausgerüstet sein.

Für beide Fälle gilt, daß die Datenkarten im eingegebenen Zustand verriegelt sind und erst nach Betätigen einer Taste freigegeben werden und daß sie wegen der im Fahrerhaus eines Nutzfahrzeugs in besonderer Weise gegebenen Verschmutzungsgefahr gegen Staub und Wasser geschützt sein müssen. Außerdem besteht die Forderung, daß die Datenkarten problemlos gehandhabt werden können, das heißt, daß die Datenkarten auch im oft schlecht beleuchteten Fahrerhaus und an der Grenze des haptischen Bereichs des Fahrers noch sicher, gegebenenfalls ohne direkte Beobachtung in das betreffende Gerät eingeb- bzw. dem Gerät entnehmbar sein sollten. Von entscheidender Bedeutung ist jedoch insbesondere bei einer Nach- bzw. Aufrüstung die Kostenfrage, das heißt ein neuer, die Verwendung von Datenkarten gestattender Fahrtschreiber oder ein der Nachrüstung dienendes, gegebenenfalls gesetzlich verordnetes Zusatzgerät muß finanziell zumutbar sein.

Die Aufgabe der vorliegenden Erfindung bestand somit darin, in einem gattungsgemäßen Gerät eine Anordnung zum Transport von Datenkarten zu schaffen, welche eine milieugerechte hohe Qualität aufweist, den genannten Handhabungsbedingungen gerecht wird und eine kostenminimierte Serienfertigung gestattet.

Die Lösung dieser Aufgabe beschreibt der Schutzanspruch 1. Weitere vorteilhafte Ausgestaltungen der Erfindung gehen aus den Unteransprüchen hervor.

Der entscheidende Vorteil der gefundenen Lösung ist darin zu sehen, daß im Gegensatz zu einem Einfädeln in einen engen Schlitz, die Handhabung beim Eingeben und Entnehmen der Datenkarten auch unter ungünstigen Einbau- oder Anordnungssituationen des betreffenden Fahrtschreibers und unter den bekanntermaßen ungünstigen Lichtverhältnissen und rauhen klimatischen Bedingungen in einem Fahrerhaus problemlos ist. Gleichzeitig bietet die Erfindung die Voraussetzung für ein Abdichten der Eingabeöffnung und ein unzugängliches und somit manipulationssicheres Verriegeln einer Datenkarte mit relativ einfachen und robusten Mitteln.

Bemerkenswert ist ferner die durch die unmittelbare Zuordnung der Führung des Schlittens zur Leiterplatte des Gerätes erzielte geringe Bauhöhe sowie die aufwandminimierte, unmittelbare Montage der Führungsmittel und das Komplettieren der Transportanordnung lediglich durch Einstecken des Transportelementes, das heißt des ein einziges Bauteil darstellenden Schlittens in die Führung.

Im folgenden wird ein Ausführungsbeispiel der Erfindung anhand der beigefügten Zeichnungen näher erläutert. Es zeigen:
Figur 1 eine Frontansicht eines elektronischen Fahrtschreibers mit einer erfindungsgemäßen Anordnung zum Transport von Datenkarten für jeweils den Fahrer und den Beifahrer einer Fahrzeugbesatzung,
Figur 2 eine perspektivische Darstellung des den Datenkarten als Träger dienenden Schlittens,
Figur 3 einen Freischnitt des Fahrtschreibers mit einer Draufsicht der Transportanordnung
Figur 4 einen Schnitt gemäß der Schnittlinie A in Figur 3 mit einer Darstellung der Leiterplatte des Fahrtschreibers und einer an ihr vormontierten Führungsleiste in einer Montagesituation unmittelbar vor dem Verbinden mit dem Gehäuse des Fahrtschreibers.

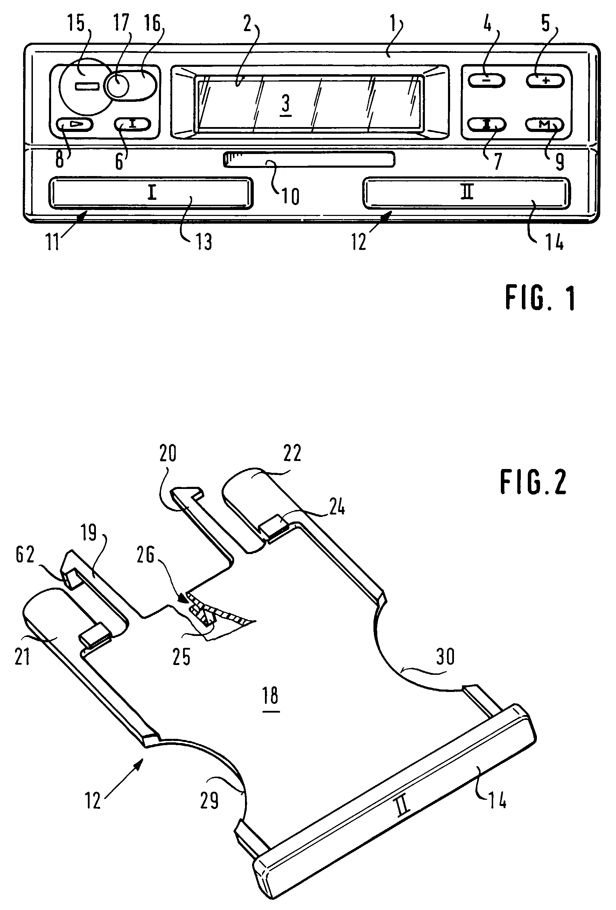

Wie die Figur 1 zeigt, weist der betrachtete elektronische Fahrtschreiber ein quaderförmiges Einbaugehäuse auf, dessen Frontseite von einer Blende beziehungsweise von einer zu einer Funktionsbaugruppe ausgerüsteten und mit dem Einbaugehäuse in geeigneter Weise verbindbaren Frontwand 1 gebildet wird. In der Frontwand 1 sind ein Fensterausschnitt 2 für ein der Frontwand 1 zugeordnetes Display 3 ausgebildet, Tasten 4, 5, 6, 7, 8 und 9 gelagert und ein Schlitz 10 für das Eingeben einer Speicherkarte, die den Transport sämtlicher Daten des Fahrtschreibers ermöglicht, ausgebildet . Mit 11 und 12 sind Schlitten bezeichnet, die als Träger für die den Fahrern I und II zugeordneten Datenkarten dienen. Die Schlitten 11, 12, denen sowohl im Gehäuse des Fahrtschreibers als auch in der Frontwand 1 geeignete Führungen zugeordnet sind, sind frontseitig jeweils mit einem Frontwandelement 13, 14 versehen, welches als Blende und als Griffleiste dient und für die Aufnahme einer Dichtung vorgesehen sein kann.

Das Display 3 dient der Anzeige wenigstens der wichtigsten Arbeitszeitdaten wie der Dauer und des Zeitpunktes der während der Durchführung eines Transportauftrages zuletzt eingelegten Pause, der Tageslenkzeit, der Lenkzeit seit der letzten Lenkzeitunterbrechung, der Doppelwochenlenkzeit und der letzten beispielsweise 8 Stunden überschreitenden Ruhezeit. Zum Anwählen dieser Werte sind die den Fahrern I und II zugeordneten Tasten 6 und 7 sowie die Menütaste 9 vorgesehen. Die Tasten 4 und 5 dienen dem "Vor- und Rückwärtsblättern" in den für die angewählte Datenart ermittelten Datensätzen. Mit der Taste 8 wird im Zusammenwirken mit einer der Tasten 6 oder 7 die jeweilige Fahrerdatenkarte zur Entnahme freigegeben. Mit 15 ist eine Abdeckung bezeichnet, mit der das Batteriefach verschlossen ist. Mit der Abdeckung 15 steht ein Plombenträger 16 in formschlüssiger Verbindung. 17 bezeichnet ein in den Plombenträger 16 eingesetztes Plombierelement.

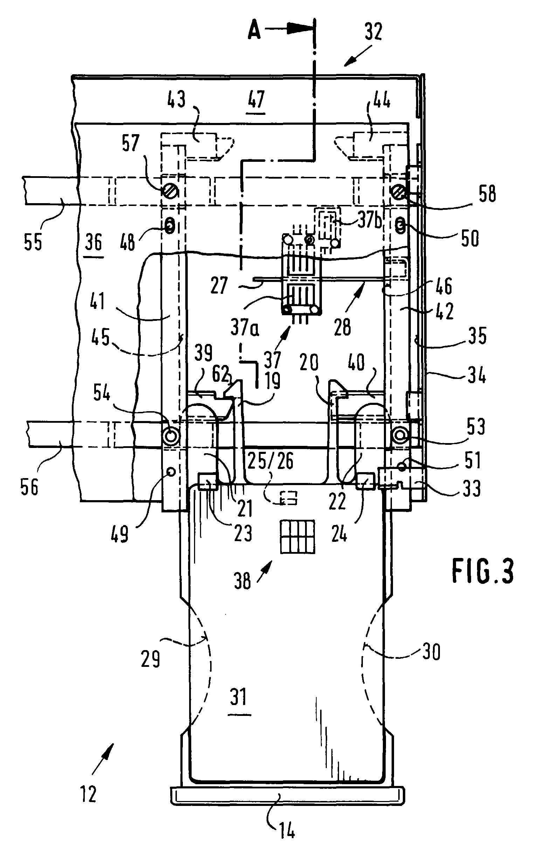

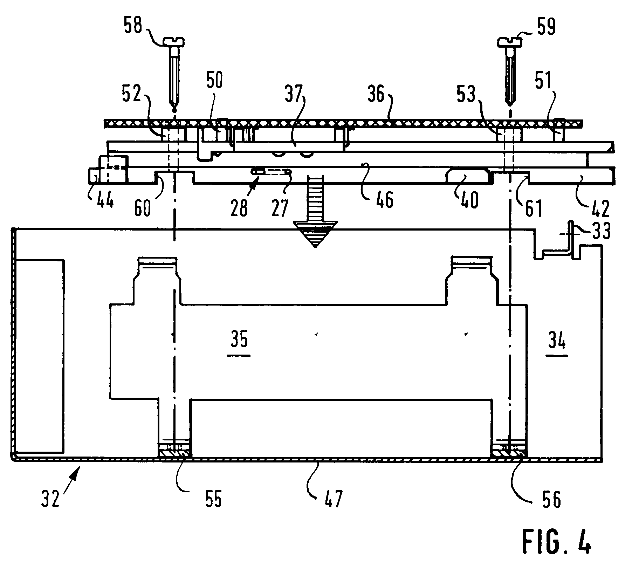

Aus der Figur 2 ist ersichtlich, daß die Schlitten 11, 12 abgesehen von den Frontwandelementen 13, 14 im wesentlichen flache Platten darstellen, an denen jeweils eine Vertiefung, mit anderen Worten eine den Abmessungen der verwendeten Datenkarten entsprechende Fassung 18 ausgebildet ist. Ferner zeigt die Figur 2, daß an der dem Frontwandelement 14 entgegengesetzten Seite des Schlittens 12 Riegel 19 und 20 und zwar quer zu den Bewegungsrichtungen des Schlittens 12 federnd angeformt sind. Zur Verbesserung der Schlittenführung sind außerdem Fortsätze 21 und 22 ausgebildet. Mit 23 und 24 sind den Datenkarten zugeordnete Niederhalter bezeichnet. Ein auf der Gegenseite der Fassung 18 ausgebildeter Mitnehmer 25 ist mit einem Schlitz 26 versehen, welcher dem Schenkel 27 einer Schenkelfeder 28 (Figuren 3 und 4) zugeordnet ist. Seitlich am Schlitten 12 angebrachte Aussparungen 29 und 30 dienen einer vereinfachten Handhabung insbesondere beim Entnehmen der Datenkarten, von denen in Figur 3 eine dargestellt und mit 31 bezeichnet ist.

In dem mit der Figur 3 dargestellten Freischnitt des betrachteten Fahrtschreibers ist die Frontwand 1, die spritzgießtechnisch hergestellt ist und ein tragendes Gehäusebauteil des Fahrtschreibers darstellt, weggelassen. Mit 32 ist ein weiteres Gehäusebauteil bezeichnet, das als Biegeteil aus Stahlblech hergestellt ist. Ein angeformter Winkel 33 dient dem Befestigen der Frontwand 1. Ein mit einer Seitenwand 34 des Gehäusebauteils 32 verschweißter Halter 35 ist für die Befestigung einer der Breite und Tiefe des Gehäusebauteils 32 weitgehend entsprechenden Leiterplatte 36 vorgesehen. Ein in der Figur 3 dargestellter, an der Leiterplatte 36 befestigter Kontaktfedersatz 37 ist dem Schlitten 12 zugeordnet und besteht aus zwei Gruppen von Kontaktfedern. Die eine Gruppe der Kontaktfedern, 37a, dient dem Kontaktieren der Kontaktfelder 38 der Datenkarte 31, die andere Gruppe von Kontaktfedern, 37b, ist dazu vorgesehen, als Startschalter für das Auslösen einer Prüfroutine zu dienen.

In der Figur 3 ist der Schlitten 12 in einer Grenzstellung dargestellt, in der ein weiteres Herausziehen nicht mehr möglich ist. In dieser Endstellung, die nicht zwingend mit der Eingabe-/Entnahmeposition identisch sein muß, ist der Riegel 19 in Eingriff mit einer von zwei Stützen 39 und 40, welche an Leisten 41 und 42 angeformt sind. Weitere ebenfalls an den Leisten 41 ausgebildete Stützen 43 und 44 dienen den Riegeln 19 und 20 als Rastelemente in der anderen Grenzstellung des Schlittens 12, das heißt in der Lese- und Schreibposition. Die beiden Leisten 41 und 42 sind mit jeweils einer der Stärke des Schlittens 12 entsprechenden Nut 45 bzw. 46 versehen, das heißt, die Leisten 41, 42 bilden die Führung des Schlittens 12, der, wenn er sich in der Lese-/Schreibposition befindet, unter der Wirkung der Schenkelfeder 28 steht, indem deren einer Schenkel 27 an dem Mitnehmer 25 angreift. Der Einfachheit halber sind die Entriegelungsmittel, die außerdem auch nicht erfindungsrelevant sind, nicht dargestellt. Es sei jedoch noch erwähnt, daß wenn nach dem Betätigen der entsprechenden Tasten der Schlitten 12 freigegeben wird, die Schenkelfeder 28 den Schlitten 12 um ein gewisses Maß erschiebt und so das Frontwandelement 14 des Schlittens 12 selbsttätig in eine günstige Griffposition befördert. Um ein unkontrolliertes Vorspringen des Schlittens 12 zu vermeiden, ist es zweckmäßig, dem Schlitten 12 eine Bremsfeder zuzuordnen. Diese hat zusätzlich den Effekt, daß der Schlitten 12 in einer geneigten Einbaulage des Fahrtschreibers beispielsweise in der Eingabe-/Entnahmeposition nicht zurückgleitet und auch bei einem "schiebenden Einlegen" einer Datenkarte in die Fassung 18 stehen bleibt. Die Bremsfeder kann der Unterseite des Schlittens 12 zugeordnet sein oder derart angeordnet sein, daß sie in eine der Nute 45 bzw. 46 eingreift. Die beiden Leisten 41 und 42, die, wie bereits erwähnt, die Führung des Schlittens 12 bilden, werden bei ihrer Montage zwischen der Leiterplatte 36 und dem Boden 47 des Gehäusebauteils 32 verspannt, mit anderen Worten, beim Befestigen der Leiterplatte 36 werden auch die Führungen der Schlitten 11 und 12 mittelbar befestigt. Dabei sind an jeder Leiste Paßstifte 48, 49, 50 und 51 ausgebildet, denen in der Leiterplatte 36 vorgesehene im einzelnen nicht bezeichnete Bohrungen zugeordnet sind. Wie am besten aus der Figur 4 verständlich wird, werden bei der Montage der Leisten 41 und 42 diese sowie die dem Schlitten 11 zugeordneten Leisten zunächst auf der Leiterplatte 36 durch Aufstecken vormontiert und die Schenkelfedern angebracht. Da die Leiterplatte 36 mit einer Vielzahl von elektronischen Bauelementen insbesondere sogenannten SMD-Bauelemente bestückt ist, sind zwischen der Leiterplatte 36 und den Leisten 41, 42 Abstandhalter erforderlich. Hierzu dienen an den Leisten 41, 42 angeformte Distanzbuchsen 52, 53 und 54. Nach der Vormontage der Leisten an der Leiterplatte 36 wird letztere mit dem Halter 35 genauer gesagt mit an dem Halter 35 angeformten Bändern 55 und 56 verschraubt, die teils am Boden 47 aufliegen und durch Punktschweißen an diesem angeheftet sind teils u-förmig angewinkelt sind, um eine den Boden nicht beschädigende Verschraubung zu ermöglichen. Mit 57, 58 und 59 sind die für diesen Zweck vorgesehenen Schrauben bezeichnet. Nute 60 und 61 sind derart in den Leisten 41 und 42 eingeformt, daß die vom Boden 47 angehobenen Bereiche der Bänder 55, 56 mit allseitigem Spiel eingreifen können, wenn die Leisten 41, 42 bzw. die Stützen 39, 40 und 43, 44 beim Festschrauben der Leiterplatte 36 auf dem Boden 47 aufliegen.

Der Vollständigkeit halber sei noch erwähnt, daß auch an der der Seitenwand 34 gegenüberliegenden Seitenwand des Gehäusebauteils 32 ein Wandelement des Halters 35 angeschweißt ist und der Halter 35 somit eine Skelettfunktion ausübt. Ferner sei noch nachgetragen, daß, damit der Riegel 19 in Eingriff mit der als Rastelement ausgebildeten, außerhalb der Bewegungsebene des Schlittens 12 liegenden Stütze 39 kommen kann, die Spitze 62 des im wesentlichen gleichflächig mit der Platte des Schlittens 12 ausgebildeten Riegels 19 rechtwinklig zur Bewegungsebene des Schlittens 12 verbreitert ist.

## Patentansprüche

1. Fahrtschreiber oder einem Fahrtschreiber zugeordnetes Lese-/Schreibgerät für die Verwendung von fahrerbezogenen Datenkarten mit einem flachen Einbaugehäuse und mit einer Anordnung zum Transport der Datenkarten zwischen einer Eingabe-/Entnahmeposition und einer Lese-/Schreibposition sowie mit einer der Breite und Tiefe des Gehäuses weitgehend entsprechenden Leiterplatte, an welcher ein die Lese-/Schreibposition der Datenkarten definierender Kontaktfedersatz angeordnet ist,
**dadurch gekennzeichnet,**
daß ein im wesentlichen als flacher Träger ausgebildeter Schlitten (11, 12) vorgesehen ist, welcher in dem Gehäuse (1/32) verschiebbar geführt ist,
daß an dem Schlitten (11, 12) stirnseitig ein eine Blende bildendes Frontwandelement (13, 14) angeformt ist und an der dem Frontwandelement (13, 14) abgewandten Seite des Schlittens (11, 12) Rastmittel ausgebildet sind und
daß der Schlitten (11, 12) mit einer der Aufnahme der Datenkarten (31) dienenden Fassung (18) ausgestattet ist, in welche die Datenkarten (31) lose einlegbar sind.

2. Fahrtschreiber oder einem Fahrtschreiber zugeordnetes Lese-/Schreibgerät nach Anspruch 1,
**dadurch gekennzeichnet,**
daß die Führungsmittel des Schlittens (11, 12) mit der Leiterplatte (36) steckbar verbindbar sind und
daß die Führungsmittel durch Befestigen der Leiterplatte (36) im Gehäuse (1/32) mittelbar zwischen der Leiterplatte (36) und dem Boden (47) des Gehäuses (1/32) festgehalten werden.

3. Fahrtschreiber oder einem Fahrtschreiber zugeordnetes Lese-/Schreibgerät nach Anspruch 2,
**dadurch gekennzeichnet,**
daß als Führungsmittel für den Schlitten (11, 12) getrennte mit geeigneten Nuten (45, 46) versehene Leisten (41, 42) vorgesehen sind.

4. Fahrtschreiber oder einem Fahrtschreiber zugeordnetes Lese-/Schreibgerät nach Anspruch 1,
**dadurch gekennzeichnet,**
daß die dem Schlitten (11, 12) zugeordneten Rastmittel als Riegel (19, 20) ausgebildet sind und
daß an den Leisten (41, 42) den Riegeln (19, 20) zugeordnete Rastelemente angeformt sind, welche die Schreib-/Leseposition und die Eingabe-/Entnahmeposition des Schlittens (11, 12) bestimmen.

5. Fahrtschreiber oder einem Fahrtschreiber zugeordnetes Lese-/Schreibgerät nach Anspruch 1,
**dadurch gekennzeichnet,**
daß der Schlitten (11, 12) abgesehen von dem Frontwandelement (13, 14) aus einer Platte besteht, in welche die den Datenkarten zugeordnete Fassung (18) eingelassen ist,
daß die Platte durch angeformte Fortsätze (21, 22) länger ausgebildet ist als sie zur Bildung der Fassung (18) nötig ist,
daß die Riegel (19, 20) quer zur Bewegungsrichtung des Schlittens (11, 12) federnd und im wesentlichen gleichflächig mit der Platte an dem Schlitten (11, 12) angeformt sind und
daß die Platte in ihrer gesamten Höhe in den Nuten (45, 46) geführt ist.

6. Fahrtschreiber oder einem Fahrtschreiber zugeordnetes Lese-/Schreibgerät nach Anspruch 5,
**dadurch gekennzeichnet,**
daß an dem Schlitten (11, 12) quer zur Bewegungsrichtung Aussparungen (29, 30) ausgebildet sind.

7. Fahrtschreiber oder einem Fahrtschreiber zugeordnetes Lese-/Schreibgerät nach Anspruch 1,
**dadurch gekennzeichnet,**
daß an der der Fassung (18) entgegengesetzten Seite des Schlittens (11, 12) ein Mitnehmer (25) angeformt ist und
daß in der Führung eine Schenkelfeder (28) vorgesehen ist, deren einer Schenkel (27) in den Bewegungsweg des Mitnehmers (25) eingreift.
